(19) Europäisches Patentamt
European Patent Office
Office européen des brevets

(11) Publication number: **0 046 074**
**B1**

(12) **EUROPEAN PATENT SPECIFICATION**

(45) Date of publication of patent specification: **13.11.85**

(51) Int. Cl.$^4$: **C 08 G 73/10**

(21) Application number: **81303619.1**

(22) Date of filing: **07.08.81**

(54) **Process for preparing polyimide solution.**

(30) Priority: **07.08.80 JP 107651/80**

(43) Date of publication of application:
**17.02.82 Bulletin 82/07**

(45) Publication of the grant of the patent:
**13.11.85 Bulletin 85/46**

(84) Designated Contracting States:
**DE FR GB**

(56) References cited:
**DE-A-1 645 434**
**US-A-4 157 996**

**Patent Abstracts of Japan Vol. 5, No. 94, 19 June 1981**

(73) Proprietor: **Ube Industries, Ltd.**
**12-32, Nishihonmachi 1-chome**
**Ube-shi, Yamaguchi-ken (JP)**

(72) Inventor: **Sasaki, Yoshikazu c/o Hirakata-Jushi-Kenkyusho**
**Ube Industries, Ltd. 3-10 Nakamiyakitamachi**
**Hirakata-shi Osaka (JP)**
Inventor: **Inoue, Hiroshi c/o Hirakata-Jushi-Kenkyusho**
**Ube Industries, Ltd. 3-10, Nakamiyakitamachi**
**Hirakata-shi Osaka (JP)**

(74) Representative: **George, Roger David et al**
**Raworth, Moss & Cook 36 Sydenham Road**
**Croydon Surrey CR0 2EF (GB)**

**EP 0 046 074 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

(1) Field of the invention

This invention relates to a process for preparing a polyimide solution in an organic polar solvent. More particularly, it relates to a process for preparing a polyimide solution having a desirable rotational viscosity, which comprises subjecting a tetracarboxylic acid ingredient composed mainly of 2,3,3',4'-biphenyltetracarboxylic acid and an aromatic diamine ingredient to one-stage polymerization-imidation in an organic polar solvent under specific conditions while adjusting the degree of polymerization in the formed aromatic polyimide.

More particularly, the present invention provides a process for preparing a polyimide solution (polymer solution) having a desirable rotational viscosity by performing the above-mentioned one-stage polymerization-imidation in a closed polymerization system while adding water if necessary and thereby adjusting the degree of polymerization (defined by the logarithmic viscosity described hereinafter) of the resulting aromatic polyimide having a high molecular weight and being soluble in an organic polar solvent.

The polyimide solution obtained according to the process of the present invention can be used as a coating varnish for coating the surface of an electric conductor with an aromatic polyimide film or as a homogeneous dope for preparing an aromatic polyimide film excellent in the mechanical properties and heat resistance by the solution-casting method or the like.

(2) Description of the prior art

As the conventional process for the preparation of polyimides, there is well-known a process in which a polyamic acid (precursor for polyimide) is prepared from a tetracarboxylic acid ingredient and a diamine ingredient and then, the polyamic acid is subjected to imidation and cyclization by various methods to form a polyimide. This process has been called "a process passing through polyamic acid" or "a two-stage polyimide-preparing process (often referred to as 'two-staged process' for brevity)".

This conventional two-staged process has effectively been adopted for preparing an aromatic polyimide insoluble or only slightly soluble in ordinary organic solvents, such as an aromatic polyimide prepared from an aromatic tetracrboxylic acid ingredient and an aromatic diamine ingredient.

Various proposals have recently been made as to the process for preparing a homogeneous solution of an aromatic polyimide by subjecting a specific aromatic tetracarboxylic acid ingredient and an aromatic diamine ingredient to one-stage polymerization-imidation in a specific organic polar solvent at an elevated temperature while removing water formed by the reaction from the polymerization system.

For example, Japanese Laid-Open Patent Application No. 113,597/75 discloses a process for preparing a soluble aromatic polyimide, which comprises a substantially equimolar mixture of a tetracarboxylic acid ingredient composed mainly of a biphenyltetracarboxylic acid and a diamine ingredient composed mainly of an aromatic diamine to one-stage polymerization-imidation in an organic polar solvent at an elevated temperature while removing water formed by the reaction from the polymerization system.

In the known one-stage process, it has been considered that in order to perform polymerization-imidation completely, water formed by polymerization-imidation should be removed as completely as possible from the polymerization system and unless this water is completely removed, an aromatic polyimide having a high imidation ratio and a high molecular weight cannot be obtained. In the above one-stage process, however, if removal of water from the polymerization system is continued, an aromatic polyimide having an extremely high molecular weight is formed, and the rotational viscosity of the polymerization reaction liquid (polyimide solution) becomes excessively high or a polymer having an extremely high molecular weight is precipitated from the polymerization reaction liquid, with the result that it is very difficult to use the as-prepared polyimide solution as a coating varnish or film-forming dope.

In the known one-stage process, it is very difficult to obtain an aromatic polyimide solution having a relatively low rotational viscosity, which is suitable for various purposes, because there are many uncontrollable factors of polymerization conditions. Furthermore, an effective process capable of providing a polyimide solution having such desirable low rotational viscosity with good reproducibility has not been developed.

In order to continuously prepare polyimide films on an industrial scale by a solution-casting method, it is necessary to stably supply a polyimide solution having a constant appropriate rotational viscosity. If polyimide solutions different in the rotational viscosity are supplied one by one, film-forming conditions should be changed according to the rotational viscosities of the respective solutions, and it becomes difficult to continuously prepare films having uniform properties stably, with the result that the productivity is drastically reduced.

Recently, it has been proposed in UK Patent 2,037,305 that a polyimide solution is prepared by a process wherein a tetracarboxylic acid ingredient mainly comprised of 3,3',4,4'-biphenyltetracarboxylic acid or its functional derivative and an aromatic diamine ingredient of 4,4'-diaminodiphenyl ether are polymerized, while being accompanied by imidation, in phenol or a halogenated phenolic compound. It is taught in this reference that the polymerization degree of polyimide, i.e., the viscosity of the polyimide solution, can be controlled by the above-specified process conditions. It is to be noted, however, that the solvents which can be used in the above-mentioned process are limited to phenol or halogenated phenolic

compounds, and other organic polar solvents cannot be used. In general, phenolic solvents have relatively high melting points and certain polyimide solutions in phenolic solvents are unstable at room temperature. Furthermore, halogenated phenolic compounds generally corrode a metal and, in some cases, the corroded product has a baneful influence on the polymerization. Sometimes, shaped articles made from the polyimide solution in a halogenated phenolic compound undesirably contain halogen retained therein. Therefore, the polyimide solution obtained by the above-mentioned process is limited in its applications. U.S. Patent 4157996 discloses a solution for film-forming comprising an aromatic bis(ether dicarboxylic acid), such as 2,2-bis[4-(3,4 dicarboxyphenoxy)phenyl]propane, an organic diamine and a solvent system including a water-soluble organic solvent component and optionally water. The solution may be made by mixing the acid, diamine and organic solvent in a closed vessel with heating, allowing the solution to cool and returning condensed water or other condensate to the solution.

Summary of the invention

It is an object of the present invention to provide a process capable of producing an aromatic polyimide solution having a desirable low rotational viscosity with good reproducibility by a one-stage polymerization-imidation procedure.

Another object of the present invention is to provide a process for the preparation of an aromatic polyimide solution wherein not only phenol and halogenated phenolic compounds but also other organic polar solvents can be used as the reaction medium.

In other words, the present invention intends to provide a process whereby an aromatic polyimide solution having a desirable low viscosity and which is useful in many applications can be obtained by a one-stage polymerization-imidation procedure wherein 2,3,3′,4′-biphenyltetracarboxylic acid or its derivatives (which is different in structure from 3,3′,4,4′-biphenyltetracarboxylic acid or its derivatives) is used as the tetracarboxylic acid ingredient and various organic polar solvents are used.

Other objects and advantages of the present invention will be apparent from the following description.

In accordance with the present invention there is provided a process for preparing a polyimide solution having a desirable rotational viscosity, which comprises polymerizing a substantially equimolar mixture of a tetracarboxylic acid ingredient containing 2,3,3′,4′-biphenyltetracarboxylic acid or a functional derivative consisting of its dianhydride or ester with a lower alcohol in an amount of at least 70 mole %, preferably at least 75 mole %, based on the total tetracarboxylic acid ingredient and an aromatic diamine ingredient in an organic polar solvent at a polymerization temperature of 100 to 300°C, preferably 120 to 280°C, in a closed polymerization system, while adding water if necessary at the start of or during polymerization, until the water content in the polymer solution becomes substantially constant.

Description of the preferred embodiments

According to the process of the present invention, a polyimide solution which contains an aromatic polyimide having a desirable degree of polymerization (i.e., a desirable molecular weight) and being uniformly dissolved in an organic polar solvent can be produced with good reproducibility, and by using this polyimide solution, shaped articles having a constant and good quality, such as a polyimide film, can be prepared in a continuous manner at a high productivity according to the solution-casting method.

Accordingly, the process for preparing a polyimide solution according to the present invention is industrially very advantageous over the conventional process in which the rotational viscosity of the resulting polyimide solution cannot substantially be adjusted with good reproducibility.

According to the process of the present invention, there can be obtained a polyimide solution in which an aromatic polyimide having a relatively high molecular weight and a high imidation ratio is completely dissolved at a temperature higher than the normal temperature (20°C), especially higher than about 40°C, and the polymer concentration is 3 to 30% by weight, especially 5 to 25% by weight.

The polyimide in the polyimide solution obtained according to the process of the present invention is a polymer comprising at least about 70%, preferably at least 75%, of recurring units represented by the following general formula:

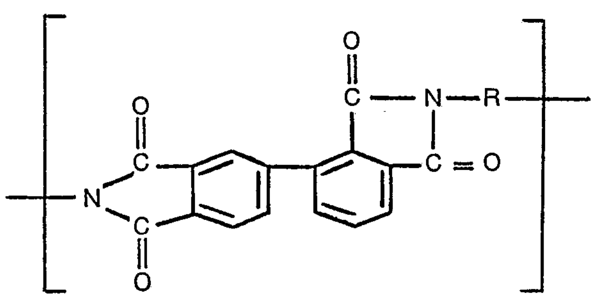

Wherein R stands for a divalent aromatic residue notionally obtainable by the removal of amino groups of an aromatic diamine.

The imidation ratio of this polymer is higher than about 90% and preferably higher than 95%, and this polymer is an aromatic polyimide having logarithmic viscosity of 0.2 to 6, especially 0.5 to 5, as measured at 50°C on a solution of 0.5 g polymer in 100 ml of p-chlorophenol.

The aromatic polyimide in the aromatic polyimide solution prepared according to the process of the present invention is homogeneously soluble in various organic polar solvents, for example, amide compounds such as N-methyl-2-pyrrolidone, dimethylformamide and dimethylacetamide, and sulfone compounds such as dimethylsulfone and sulforane. The aromatic polyimide is also soluble in phenolic compounds such as phenol, cresol, xylenol, chlorophenol, bromophenol, 2-chloro-4-hydroxytoluene, 2-chloro-5-hydroxytoluene and 3-chloro-6-hydroxytoluene. However, among these phenolic compounds, halogenated phenols such as chlorophenol and bromophenol are not preferable because halogenated phenols are corrosive. The concentration of the aromatic polyimide in the above-mentioned organic polar solvents may be in the range of from about 3 to about 30% by weight.

A polyimide film or polyimide coating having excellent properties can be prepared stably by casting the polyimide solution prepared according to the process of the present invention into the form of a film and removing the solvent from the cast film by evaporation.

The process of the present invention will now be described in detail.

The tetracarboxylic acid ingredient used in the process of the present invention comprises at least 70 mole %, preferably at least 75 mole %, more preferably at least 95 mole %, especially 96 to 100 mole %, based on the total tetracarboxylic acid ingredient, of 2,3,3',4'-biphenyltetracarboxylic acid or its functional derivative.

By the 2,3,3',4'-biphenyltetracarboxylic acid or its functional derivative is meant 2,3,3',4'-biphenyltetracarboxylic acid, a dianhydride thereof, an ester thereof with a lower alcohol or a mixture thereof. In the process of the present invention, use of a tetracarboxylic acid ingredient composed mainly of 2,3,3',4'-biphenyltetracarboxylic dianhydride (hereinafter often referred to as "a-BPDA") is especially preferred.

In the present invention, the tetracarboxylic acid ingredient used may contain, in addition to 2,3,3',4'-biphenyltetracarboxylic acid or its functional derivative, a minor amount of other tetracarboxylic acid, for example, 3,3',4,4'-biphenyltetracarboxylic acid or its functional derivative, 2,2',3,3'-biphenyltetracarboxylic acid or its functional derivative, 3,3',4,4'-benzophenone-tetracarboxylic acid or its functional derivative, bis(3,4-dicarboxyphenyl)methane or its functional derivative, 2,2-bis(3,4-dicarboxyphenyl)propane or its functional derivative, bis(3,4-dicarboxyphenyl)ether or its functional derivative, or pyromellitic acid or its functional derivative. The "functional derivative" in each case is the dianhydride or ester with a lower alcohol.

The aromatic diamine ingredient used in the present invention is composed mainly of a diphenyl type diamine compound such as 4,4'-diaminodiphenyl ether, 4,4'-diaminodiphenylmethane or 4,4'-diaminodiphenyl thioether. It is preferred that the content of the diphenyl type diamine compound in the aromatic diamine ingredient be at least about 50 mole %, especially 70 to 100 mole % based on the total aromatic diamine ingredient.

In the process of the present invention, the tetracarboxylic acid ingredient and the aromatic diamine ingredient are used in such amounts that the molar ratio of these two ingredients is substantially 1. These two ingredients used need not be absolutely equimolar, but the mole number of one ingredient may be somewhat larger than the mole number of the other ingredient.

As the organic polar solvent used in the present invention, there can be mentioned, for example, N,N-diethylformamide, N,N-diethylacetamide, N,N-dimethylformamide, N,N-dimethylacetamide, N,N-dimethylmethoxyacetamide, N-methyl-2-pyrrolidone, dimethylsulfoxide, hexamethylformamide, pyridine, dimethylsulfone, tetramethylene-sulfone, dimethyltetramethylene-sulfone, sulforane, phenol, cresol, xylenol, chlorophenol and chlorocresol.

Furthermore, a mixed solvent comprising such an organic polar solvent and a minor amount of benzene, xylene, toluene, cyclohexane may be used.

In the process of the present invention, the above-mentioned tetracarboxylic acid ingredient and aromatic diamine ingredient are used in substantially equimolar amounts and polymerization is carried out in an organic polar solvent in a closed polymerization system at a polymerization temperature of 100 to 300°C, while adding water if necessary, until the water content in the polymer solution becomes constant, whereby a polyimide solution having a desirable rotational viscosity is prepared.

In the present invention, not only the state in which the polymerization system is completely closed but also the state in which the gas in the reaction system is not allowed to freely flow and escape from the reaction system or the state in which when an appropriate gas is supplied to the reaction system and this gas is not allowed to freely flow and escape from the reaction system continuously is meant by the term "closed polymerization system". In short, by the "closed polymerization system" is meant the state of the reaction system in which water vapor in the reaction system is prevented from escaping from the reaction system continuously or in succession. Accordingly, temporary supply or discharge of the gas for adjusting the total pressure in the polymerization system or supply of a liquid or discharge of the polymer solution should be interpreted as falling within the category of the term "closed polymerization system" in the present invention. In the present invention, such a closed polymerization system that supplies or

discharges a gaseous substance is not effected in the latter half of the polymerization reaction and in which the total pressure in the reaction system is finally controlled at a certain level is most preferred.

In the present invention, it is preferred that reaction conditions be controlled so that the water content in the polymer solution in the reaction system is 0.01 to 10%, particularly 0.1 to 8%, especially particularly 0.2 to 5%, at the point of completion of the polymerization reaction.

In order to attain such water content, it is preferred that the partial pressure of water in the reaction system be maintained in the range of from 0.01 to 20 $kg/cm^2$ (1 $kg/cm^2$=0.98 bar), particularly 0.02 to 10 $kg/cm^2$ (1 $kg/cm^2$=0.98 bar), especially particularly 0.1 to 8 $kg/cm^2$ (1 $kg/cm^2$=0.98 bar). With an increase of the partial pressure of water in the reaction system and also with an increase of the water content in the polymer solution, the rotational viscosity of the polyimide solution and the polymerization degree of the polyimide decrease.

In the process of the present invention, if a polymer solution containing 3 to 30% by weight of a formed polyimide is further maintained at an appropriate polymerization temperature of 100 to 300°C in a closed system to continue the polymerization, the water content in the polymer solution in the reaction system becomes constant within about 0.1 to about 60 hours, especially 0.2 to 50 hours, and also the rotational viscosity of the polymer solution becomes constant.

In the process of the present invention, the final water content in the polymer solution can freely be adjusted by controlling the amount of water added at the initial stage of polymerization or, if necessary, in the midway of polymerization and the polymerization temperature. Accordingly, the final rotational viscosity of the polymer solution can be adjusted with good reproducibility according to the amount of water added.

That is, water may be added at the initial stage of polymerization or in the midway of polymerization.

The amount of water added during polymerization is ordinarily up to about 0.8 g per gram of the polyimide formed in the polymer solution, and it is especially preferred that water be added in an amount of 0.001 to 0.6 g per gram of the polyimide formed in the polymer solution.

In the present invention, preliminary polymerization in a non-closed system may be conducted for formation of a polyimide having a very low degree of polymerization prior to polymerization to be conducted in a closed system. In this case, polymerization is then carried out in a closed system in the above-mentioned manner.

In the process of the present invention, it is preferred that polymerization be carried out in an atmosphere of an inert gas, especially in a nitrogen atmosphere.

The rotational viscosity of the polyimide solution obtained according to the process of the present invention is 1 to 10,000 poises, (0.1 to 1000 $Ns/m^2$) preferably 5 to 5,000 poises, (0.5 to 500 $Ns/m^2$) especially preferably 10 to 2,000 poises (1 to 200 $Ns/m^2$), as measured at 140°C. This solution is a very homogeneous and stable polyimide solution containing 3 to 30% by weight of an aromatic polyimide.

The polyimide solution can suitably be used not only as a dope for formation of a polyimide film but also as a varnish for coating an electric wire.

The present invention will now be described in detail with reference to the following Examples.

In the Examples, the partial pressure of water vapor is a value obtained by subtracting the vapor pressure of the solvent and the partial pressure of initially charged nitrogen gas from the total pressure. The water content in the polymer solution is determined by measuring the amount of water in the polymer solution by using a Karl-Fisher type measuring device ("Model MK-SS" supplied by Kyoto Denshi Kogyo K.K.) and making calculations based on the measured value.

The rotational viscosity of the polymer solution is measured at 140°C by using a rotating viscometer ("Vismetron" supplied by Tokyo Keisoku K.K.).

The logarithmic viscosity is calculated from a value measured at 50°C on a 0.5 g polymer solution in 100 m of p-chlorophenol.

Examples 1 through 5

A glass-coated autoclave having an inner diameter of 4.5 cm and a depth of 17 cm was charged with 10.0 g of 2,3,3',4'-biphenyltetracarboxylic dianhydride, 6.81 g of 4,4'-diaminodiphenyl ether and 123.0 g of a solvent shown in Table 1, below, and water was added in an amount shown in Table 1 or water was not added. The gas phase in the autoclave was substituted by nitrogen gas, and the autoclave was sealed and the temperature of the reaction liquid was elevated to a level shown in Table 1. Polymerization was carried out for a reaction time shown in Table 1. After initiation of polymerization, the rotational viscosity of the reaction liquid was increased with the lapse of time, and after lapse of the polymerization time shown in Table 1, the rotational viscosity became constant.

The water content in the polymer solution (polyimide solution) in the reaction system after completion of the polymerization reaction, the partial pressure of water vapor in the reaction system, the rotational viscosity of the polymer solution as measured at 140°C and the logarithmic viscosity of the polyimide in the polymer solution as measured at 50°C and 0.5 g/100 m of the solvent are shown in Table 1.

Each of the so-obtained polymer solutions (polyimide solutions) was heated at 140°C and cast on a glass sheet in a certain thickness to form a film of the solution. The majority of the solvent was evaporated and removed under a pressure of 1 mmHg at a temperature of about 140°C for a time of about 1 hour by using a vacuum drier to form a polyimide film. The film was gradually heated to 300°C in a hot air drier to

substantially remove the residual solvent. The thickness, tensile strength and elongation of the obtained polyimide film are shown in Table 1.

The polyimide film obtained from the polymer solution prepared in Example 1 had such an excellent heat resistance that the thermal decomposition temperature was higher than 460°C. Polyimide films obtained from the polymer solutions prepared in other Examples were found to have similar thermal decomposition temperatures.

Examples 6 and 7

Procedures of Example 1 were repeated in the same manner except that 6.74 g of 4,4′-diaminodiphenylmethane (Example 6) or 7.28 g of 4,4′-diaminodiphenyl thioether (Example 7) was used instead of 4,4′-diaminodiphenyl ether.

The obtained results are shown in Table 1.

Examples 8 and 9

Procedures of Example 1 were repeated in the same manner except that 7.5 g of 2,3,3′,4′-biphenyltetracarboxylic dianhydride and 2.5 g of 3,3′,4,4′-biphenyltetracarboxylic dianhydride were used in combination as the tetracarboxylic acid ingredient and water was added in an amount shown in Table 1 or water was not added.

The obtained results are shown in Table 1.

Abbreviations used in Table 1 indicate the following compounds.

a-BPDA: 2,3,3′,4′-biphenyltetracarboxylic dianhydride
s-BPDA: 3,3′,4,4′-biphenyltetracarboxylic dianhydride
DADE: 4,4′-diaminodiphenyl ether
DADM: 4,4′-diaminodiphenyl methane
DADT: 4,4′-diaminodiphenyl thioether
NMP: N-methyl-2-pyrrolidone
DMF: N,N′-dimethylformamide.

Comparative Example 1

Procedures of Example 1 were repeated in the same manner except that the closed polymerization system was not used, water formed by the reaction escaped from the polymerization system together with the evaporated solvent, and polymerization was conducted while recycling to the polymerization system the solvent from which water had been separated.

The obtained results are shown in Table 1.

TABLE 1

| Example No. | Polymerization conditions: Tetra-carboxylic acid | Aromatic diamine | Solvent | Amount (ml) of water added | Temperature (°C) | Time (hours) | State of system after polymerization: Water content (%) in polymer solution | Partial pressure (kg/cm²) (1 kg/cm²=0.98 bar) of water vapor in reaction system | Rotational viscosity of polymer solution (poises) | Rotational viscosity of polymer solution (Ns/m²) | Logarithmic viscosity of polyimide | Polyimide film: Thickness µm | Tensile strength (kg/mm²) | Elongation (%) |
|---|---|---|---|---|---|---|---|---|---|---|---|---|---|---|
| 1 | a-BPDA | DADE | phenol | 0 | 170 | 30 | 0.78 | 0.8 | 410 | 41 | 2.06 | 40—42 | 13.5 | 92 |
| 2 | ditto | ditto | ditto | 0.5 | 170 | 30 | 1.02 | 1.1 | 350 | 35 | 2.00 | | | |
| 3 | ditto | ditto | NMP | 0 | 180 | 30 | 0.97 | 1.5 | 320 | 32 | 1.97 | 25—27 | 12.7 | 84 |
| 4 | ditto | ditto | DMF | 0 | 140 | 35 | 1.01 | 0.4 | 230 | 23 | 1.85 | 31—34 | 12.9 | 79 |
| 5 | ditto | ditto | sulforane | 0 | 180 | 30 | 0.81 | 1.3 | 370 | 37 | 2.01 | 23—26 | 11.8 | 73 |
| 6 | ditto | DADM | phenol | 0 | 170 | 30 | 0.75 | 0.7 | 260 | 26 | 1.90 | 22—25 | 10.6 | 53 |
| 7 | ditto | DADT | ditto | 0 | 170 | 30 | 0.83 | 0.8 | 310 | 31 | 1.96 | 27—30 | 10.3 | 59 |
| 8 | a-BPDA, s-BPDA | DADE | ditto | 0 | 170 | 30 | 0.81 | 0.7 | 460 | 46 | 2.10 | 26—30 | 14.7 | 101 |
| 9 | ditto | ditto | ditto | 0.5 | 170 | 30 | 1.12 | 1.0 | 380 | 38 | 2.02 | 24—27 | 15.2 | 98 |
| Comparative Example 1 | a-BPDA | ditto | ditto | — | 170 | 30 | 0.10 | <0.1 | 5,500 | 550 | 3.13 | Formation of film was impossible | | |

**Claims**

1. A process for preparing a polyimide solution which comprises polymerizing a substantially equimolar mixture of a tetracarboxylic acid ingredient containing 2,3,3',4'-biphenyltetracarboxylic acid or its dianhydride or an ester thereof with a lower alcohol in an amount of at least 70 mole %, based on the total tetracarboxylic acid ingredient and an aromatic diamine ingredient in an organic polar solvent at a polymerization temperature of 100 to 300°C in a closed polymerization system, while adding water if necessary at the start of or during polymerization, until the water content in the polymer solution becomes substantially constant.

2. A process according to claim 1 wherein the organic polar solvent is selected from the group consisting of N,N-diethylformamide, N,N-diethylacetamide, N,N-dimethylformamide, N,N-dimethylacetamide, N,N-dimethylmethoxyacetamide, N-methyl-2-pyrrolidone, dimethylsulfoxide, hexamethylformamide, pyridine, dimethylsulfone, tetramethylene-sulfone, dimethyltetramethylene-sulfone, and sulforane.

3. A process according to claim 1 wherein the tetracarboxylic acid ingredient contains at least 75 mole %, based on the total tetracarboxylic acid ingredient, of 2,3,3',4'-biphenyltetracarboxylic dianhydride.

4. A process according to claim 1 wherein the aromatic diamine ingredient contains at least about 50 mole %, based on the total aromatic diamine ingredient, of a diphenyl type diamine compound.

5. A process according to claim 1 wherein the polymerization temperature is in the range of from 120 to 280°C.

6. A process according to claim 1 wherein water is added into the closed polymerization system in an amount of up to about 0.8 gram per gram of the polyimide formed in the polymer solution.

7. A process according to claim 1 or 6 wherein the partial pressure of water vapor in the closed polymerization system is maintained in the range of from 0.01 to 20 $kg/cm^2$ (1 $kg/cm^2$=0.98 bar) so that the water content in the polymer solution in the polymerization system be in the range of from 0.01 to 10% at the time of completion of polymerization.

**Patentansprüche**

1. Verfahren zur Herstellung einer Polyimidlösung, bei dem eine im wesentlichen äquimolare Mischung aus einem Tetracarbonsäurebestandteil, enthaltend 2,3,3',4'-Biphenyltetracarbonsäure oder deren Dianhydrid oder einen ester davon, mit einem niedrigen Alkohol in einer Menge von mindestens 70 Mol-%, basierend auf dem gesamten Tetracarbonsäurebestandteil, und einem aromatischen Diaminbestandteil in einem organischen polaren Lösungsmittel bei einer Polymerisationstemperatur von 100 bis 300°C in einen geschlossenen Polymerisationssystem polymerisiert wird, wobei erforderlichenfalls am Beginn oder während der Polymerisation Wasser zugesetzt wird, bis der Wassergehalt in der polymeren Lösung im wesentlichen konstant wird.

2. Verfahren nach Anspruch 1, bei dem das organische polare Lösungsmittel ausgewählt ist aus der Gruppe bestehend aus N,N-Diethylformamid, N,N-Dimethylacetamid, N,N-Dimethylformamid, N,N-Dimethylacetamid, N,N-Dimethylmethoxyacetamid, N-Methyl-2-pyrrolidon Dimethylsulfoxid, Hexamethylformamid, Pyridin, Dimethylsulfon, Tetramethylen-sulfon, Dimethyltetramethylen-sulfon und Sulforan.

3. Verfahren nach Anspruch 1, bei dem der Tetracarbonsäurebestandteil, basierend auf dem gesamten Tetracarbonsäurebestandteil, mindestens 75 Mol-% 2,3,3',4'-Biphenyltetracarbondianhydrid enthält.

4. Verfahren nach Anspruch 1, bei dem der aromatische Diaminbestandteil, basierend auf dem gesamten aromatischen Diaminbestandteil, mindestens etwa 50 Mol-% einer Diaminkomponente vom Dyphenyltyp enthält.

5. Verfahren nach Anspruch 1, bei dem die Polymerisationstemperatur im Bereich von 120 bis 280°C liegt.

6. Verfahren nach Anspruch 1, bei dem Wasser dem geschlossenen Polymerisationssystem in einer Menge von bis zu etwa 0,8 g je Gramm des in der polymeren Lösung gebildeten Polyimids zugesetzt wird.

7. Verfahren nach Anspruch 1 oder 6, bei dem der Partialdruck des Wasserdrucks in dem geschlossenen Polymerisationssystem in dem Bereich von 0,01 bis 20 kg/cm (1 $kg/cm^2$=0,98 bar) gehalten wird, so daß der Wassergehalt in der polymeren Lösung in dem Polymerisationssystem zum Zeitpunkt des Polymerisationsabschlusses im Bereich von 0,1 bis 10% liegt.

**Revendications**

1. Procédé de préparation d'une solution de polyimide caractérisé en ce qu'on polymérise un mélange sensiblement équimolaire d'un acide tétracarboxylique contenant l'acide 2,3,3',4'-biphényltétracarboxylique ou son dianhydride ou un ester de ceux-ci, avec un alcool inférieur à raison d'au moins 70% molaire d'alcool par rapport à l'acide tétracarboxylique total, et d'une diamine aromatique dans un solvant polaire organique, à une température de polymérisation allant de 100 à 300°C, dans un système de polymérisation fermé, en ajoutant de l'eau, si nécessaire, au départ de la polymérisation ou pendant celle-ci, jusqu'à ce que la teneur en eau de la solution de polymère devienne pratiquement constante.

2. Procédé suivant la revendication 1 caractérisé en ce que le solvant polaire organique est choisi dans

le groupe constitué par le N,N-diéthylformamide, le N,N-diéthylacétamide, le N,N-diméthylformamide, le N,N-diméthylacétamide, le N,N-diméthylméthoxyacétamide, la N-méthyl-2-pyrrolidone, le sulfoxyde de diméthyle, l'hexaméthylformamide, la pyridine, la diméthylsulfone, la tétraméthylène-sulfone, la diméthyltétraméthylène-sulfone, et le sulforane.

3. Procédé suivant la revendication 1 caractérisé en ce que l'acide tétracarboxylique contient au moins 75% molaire, basé sur l'acide tétracarboxylique total, de dianhydride 2,3,3',4'-biphényltétracarboxylique.

4. Procédé suivant la revendication 1 caractérisé en ce que la diamine aromatique contient au moins environ 50 % molaire, par rapport à la diamine aromatique totale, d'une diamine du type diphényle.

5. Procédé suivant la revendication 1 caractérisé en ce que la température de polymérisation est comprise dans la gamme allant de 120 à 280°C.

6. Procédé suivant la revendication 1 caractérisé en ce que de l'eau est ajoutée dans le système de polymérisation fermé à raison d'environ 0,8 gramme par gramme de polyimide formé dans la solution de polymère.

7. Procédé suivant l'une quelconque des revendications 1 ou 6 caractérisé en ce que la pression partielle de la vapeur d'eau dans le système de polymérisation fermé est maintenue comprise dans la gamme allant de 0,098 bar à 19,6 bars si bien que la teneur en eau dans la solution de polymère dans le système de polymérisation fermé est comprise dans la gamme allant de 0,01 à 10% au moment de l'achèvement de la polymérisation.